# EUROPEAN PATENT SPECIFICATION

(11) **EP 1 895 198 B1**
(45) Date of publication and mention of the grant of the patent: **25.04.2012**
(21) Application number: 07270044.6
(22) Date of filing: 28.08.2007
(51) Int. Cl.: F16H 63/48, F16H 59/08

(54) **An electric control selector system for a motor vehicle transmission**
Elektrisches Positionswählsystem für ein Kraftfahrzeuggetriebe
Système sélecteur de commande électrique pour transmission de véhicule

(30) Priority: 01.09.2006 GB 0617166
(43) Date of publication of application: 05.03.2008
(73) Proprietor: JAGUAR CARS LIMITED, Whitley Coventry CV3 4LF (GB)
(72) Inventor: Stares, Peter, West Midlands, CV5 8AE (GB); Nicholls, Ian, Coventry, West Midlands CV2 3HX (GB); Jerger, Robert, Southam, Warwickshire CV47 8JP (GB); Pickering, Carl, Kenilworth, Warwickshire CV8 2HU (GB)
(74) Representative: Holmes, Matthew William

(56) References cited:
- EP-A- 1 657 475
- DE-A1-102004 054 264
- US-A- 5 919 112
- US-A1- 2002 023 809

## Description

The present invention relates to a control system for a shift-by-wire selector mechanism of a motor vehicle transmission, more specifically an automatic or semiautomatic vehicle transmission.

US 5,085,106 discloses such a shift-by-wire selector having the form of a receptacle module provided with a number of push buttons, each push button selecting an operating mode of the automatic transmission, i.e. Park, Neutral, Drive. The receptacle has also a slot for insertion of a key card to enable the push buttons to be operated. Further, a control system is provided to automatically shift the transmission to its parking position when the key card is removed and certain vehicle conditions such as speed sensing, status of the driver's door are detected. The key card can also be utilized to provide keyless entry for the vehicle. US 5,919,112 also discloses a control system for an automatic transmission in which in dependence on specified operating parameter of the motor vehicle, i.e. ignition key withdrawn, vehicle speed, the transmission is engaged automatically to its parking position. The engagement of the parking position can be prevented when the driver has selected Neutral mode with the selector before he/she stops the engine. Such systems require the use of a selector having instable positions in which the selector always returns to the same position. Hence, the position of the transmission can easily be indicated by lighting a park light on an indicator to provide an ongoing indication of the position in which the transmission has been left.

GB2420833 discloses a shift-by-wire selector with the features of the preamble of claim 1 and having multi-stable positions which from the driver's point of view provide a selector close to the conventional automatic transmission selector lever having for each position mode of the selector a mechanical detent with a configurable force.

It is an object of the present invention to provide an electric selector control system for a motor vehicle having an operating mode for a multi-stable shift-by-wire selector, especially for a motor vehicle, without a removable key, equipped with an On/Off ignition switch for starting and stopping the engine, when the driver is detected leaving his vehicle.

According to a first aspect of the invention there is provided an electric selector control system for an automatic transmission of a motor vehicle, the vehicle having an engine and including a keyless entry system having an electronic ignition control module for selectably turning the ignition of the engine on or off in response to activity of an On/Off switch, the transmission having a number of operating modes, at least four of the operating modes being Park mode, Drive mode, Neutral mode and Reverse mode, a transmission control unit (TCU) which in use controls the ratio of the transmission, the system includes a multi-stable selector which is operable by the driver of the vehicle to select a respective one of the operating modes of the transmission, the vehicle also has an electronic transmission selector (ETS) for sensing the selected mode position of the selector and sending a command to the TCU, the system further includes selector drive means, wherein the selector drive means in use are controlled by the ETS to automatically move the multi-stable selector to Park mode in dependence on at least one specified operating parameter of the vehicle, said at least one specified operating parameter being a shutting-off of the engine by the On/Off switch and wherein the automatic motion of the selector is prevented over a predetermined period, so-called Hold Neutral function, when the selector is in Neutral mode before a shutting-off of the engine by the On/Off switch.

Preferably the multi-stable selector is a rotary selector.

Preferably the control system further comprises a power supply and voltage sensor for measuring the voltage of power supply and the ETS is programmed to automatically move the selector to Park mode even if the Hold Neutral Function is detected.

Preferably the ETS is programmed to cancel the hold neutral function if the selector is detected in Park mode or the vehicle is requested to be locked.

The control system may be provided with a retractor actuator to retract the selector inside a housing forming part of a centre console mounted between a driver's seat and a passenger seat into an inactive position where it cannot be readily moved by the driver and the retractor actuator in use is also controlled by the ETS to retract the selector when at least a shutting-off of the engine by the On/Off switch is determined.

According to a second aspect of the invention there is provided a method for operating an electric selector control system in accordance with said first aspect, when the On/Off ignition switch has been activated to turn the engine ignition off, comprising the steps of:
a) checking that the vehicle is at a standstill position;
b) checking that the ETS position before the On/Off ignition switch was not in Neutral mode and
c) if not providing an instruction command to the drive means to move the selector to Park mode,
d) if yes maintaining the selector in its current position over a predetermined period of time before providing an instruction command to the drive means to move the selector to Park mode.

The invention will now be described by way of example with reference to the accompanying drawings of which: -
Fig.1 is a schematic representation of the principal electrical subsystems of a motor vehicle provided with a shift-by-wire selector system in accordance with the present invention; and
Fig.2 is a flow chart showing a method for automatically operating the shift-by-wire system shown in Fig.1.

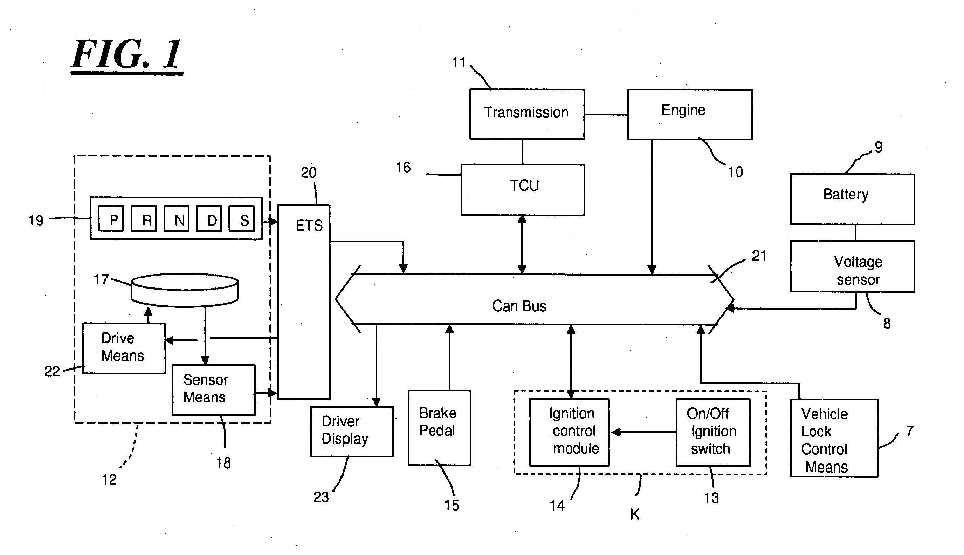

With reference to Fig.1, there is shown an electrical architecture of a motor vehicle including an engine 10, an automatic gearbox or transmission 11, a multi-stable selector system 12 and a keyless entry system K. The keyless entry system K has an On/Off ignition switch 13 for example in the form of Stop/Start button which is provided in a passenger compartment of the vehicle. The On/Off switch 13 is connected to an electronic ignition control module 14 for turning on or turning off the engine ignition depending on whether or not for instance a brake pedal 15 was depressed when the On/OFF switch is activated.

The transmission 11 is controlled by a transmission control unit (TCU) 16 which includes sensors arranged to detect the position of the transmission. The TCU 16 is also electrically connected to an Electronic Transmission Selector (ETS) 20. The ETS 20 is electrically connected to the selector system 12 which is provided in the passenger compartment for enabling the selection of operating modes in the transmission, e.g. Park (P), Reverse (R), Neutral (N), Drive (D). It may be provided further operating modes such as a Sport (S) or a Manual mode.

The selector system 12 comprises a rotary selector 17 which can be grasped by the driver to select the operating mode and sensor means in the form of position sensors 18 to detect the position of the rotary selector 17 and to transmit an input to the ETS 20 which transmit a command input to the TCU 16. The rotary selector 17 is associated with an arrangement of illuminated labels (P, R, N, D, S) 19 indicating the selected mode. The rotary selector 17 further includes a detent plate (not shown) which co-operates with a detent pin enabling the provision of a shift-by-wire selector which has multi-stable positions, as explained more fully in GB2420833 for instance.

It will be appreciated that communications between the TCU 16 and the different electronic components mentioned above, that is the selector 17 and ETS 20, the electronic ignition control module 14, are conveniently performed by a standard corporate protocol bus interface, such as a Controller Area Network (CAN) serial bus 21. The TCU 16 thus receives input signals from different electronic components of the vehicle, that is the ETS 20, the engine 10 and the electronic ignition control module 14, and also from the position sensors 18 and a vehicle speed input from for instance an antilock braking system (ABS) 22.

Conventionally the TCU 16 is also connected to a driver display 23 in order to indicate the currently engaged gear of the transmission 11 and possibly any transmission fault. It would be appreciated that the electronic modules of the vehicle are all connected to a vehicle power supply, shown as battery 9. This battery 9 is also connected to a voltage sensor 8 which transmits its inputs to the CAN bus 21. The vehicle is provided with a vehicle lock control module 7 in a known manner.

As the vehicle is devoid of a mechanical key, therefore there is no mechanical device preventing the driver from turning the engine ignition off by pushing the On/Off switch 13 without previously securing the vehicle by locking out the selector 17 to the park mode and thus shifting the transmission 11 in its park position.

To overcome this problem and allow automatic lock out of the selector 17 to the park mode in response to parking condition of the vehicle, the selector system 12 is provided with a selector drive means 22 controlled by the ETS 20 to automatically rotate the selector and the detent plate to Park mode according to a control strategy provided with the ETS 20 and explained in detail below.

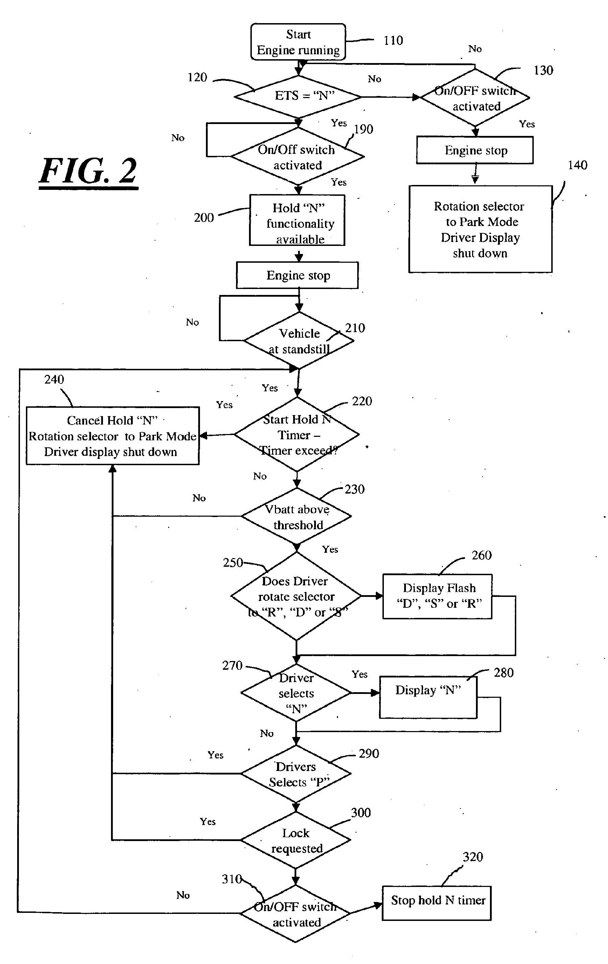

Fig.2 illustrates a flow diagram of the control strategy of the selector system 12.

The control routine starts at 110, in which the engine ignition has previously been turned on by the On/Off switch. Inquiries are made at step 120 to determine whether the selector is in Neutral mode. If no, an inquiry is made at 130 as to whether the On/Off switch has been activated to turn the ignition (or power mode) off. A positive answer to this inquiry will transmit a command to the selector drive means 22 through the ETS 20 so as to rotate the rotary selector 17 to park (P) mode, shift the transmission 11 to its park position and shut down the driver display 23 and the illuminated labels 19, at step 140.

However when the ETS 20 is determined to be in Neutral (N) mode and that the On/Off switch 13 has been activated to turn the ignition off (step 190), the selector 17 is maintained in its Neutral mode over a predetermined time period, for instance 14 minutes, in step 220 and only if the vehicle is determined at standstill, in steps 200 and 210.

Over the same time period, it is determined at step 230 whether the Voltage of the battery is above a pre-set maximum value. If the answer is negative, the timer is stopped and a command is sent to the drive means 22 to rotate the rotary selector 17 to Park (P) mode, the transmission to park position and then the driver display 23 and the illuminated labels 19 is shut down, in step 240.

On the contrary if the answer is positive several inquiries are made to check any changes on the overall status of the vehicle.

Hence, in step 250 it is determined whether the driver has rotated the selector 17 to either reverse mode, drive mode or Sport mode. If yes, a command is sent to the display 19 to flash the label of the mode selected by the driver to show that the gear mode is not available, in step 260.

In step 270, if it is determined that the driver has selected the Neutral mode again, a command is sent to light the label "N" on the driver display 23. In both of steps 250 and 270, manipulation of the rotary selector 17 by the driver has no consequence on the timer.

However, if it is determined that the driver has selected Park (P) mode in step 290 or has requested a lock of the vehicle door, in step 300, for instance by pressing a lock button on the outside door handle then the timer is cancelled and a command to rotate the selector 17 to the Park mode and shift the transmission to park is sent. Such a command will also be sent when the timer is determined exceeded in step 220.

In step 310 if it is determined that the On/Off switch 13 has been activated to turn the ignition on, the timer is cancelled (step 320) and the routine is shifted back to step 110.

In a modification, the selector system 12 further includes a retractor actuator (not shown) to retract the rotary selector 17 inside a housing forming part of a centre console mounted between the driver's seat and a passenger seat into an inactive position where it cannot be readily moved by the driver. In such a modification when the ETS 20 determines that the selector 17 must be rotated to park mode a command is sent to the selector drive means 22 to rotate the selector 17 to park mode together with a command to retract the selector 17 within the housing. In an alternative, the command to retract the rotary selector 17 within the housing is subsequent to the command to rotate the rotary selector 17.

The method and system as described herein have the advantages of offering a multi-stable selector which is automatically locked out when it is determined that the vehicle is in the park situation and reduce the number of operations needed by the driver before he/she can safely leave the vehicle.

## Claims

1. An electric selector control system (12) for an automatic transmission (11) of a motor vehicle, the vehicle having an engine (10) and including a keyless entry system (K) having an electronic ignition control module (14) for selectably turning the ignition of the engine on or off in response to activity of an On/Off switch (13), the transmission having a number of operating modes, at least four of the operating modes being Park mode, Drive mode, Neutral mode and Reverse mode, a transmission control unit (TCU) (16) which in use controls the ratio of the transmission, the system (12) includes a multi-stable selector (17) which is operable by the driver of the vehicle to select a respective one of the operating modes of the transmission, the vehicle also has an electronic transmission selector (ETS) (20) for sensing the selected mode position of the selector and sending a command to the TCU (16), the system (12) further includes selector drive means (22), **characterised in that** the selector drive means (22) in use are controlled by the ETS (20) to automatically move the multi-stable selector (17) to Park mode in dependence on at least one specified operating parameter of the vehicle, said at least one specified operating parameter being a shutting-off of the engine by the On/Off switch (13) and **in that** the automatic motion of the selector (17) is prevented over a predetermined period, so-called Hold Neutral function, when the selector (17) is in Neutral mode before a shutting-off of the engine by the On/Off switch (13).

2. A control system as claimed in claim 1 in which the multi-stable selector (17) is a rotary selector.

3. A control system as claimed in claim 1 or claim 2 wherein and further comprising a power supply (9) and voltage sensor (8) for measuring the voltage of power supply and the TCU (16) is programmed to automatically move the selector (17) to Park mode even if the Hold Neutral Function is detected.

4. A control system as claimed in any one of claims 1 to 3, the vehicle having a remote lock control means (7) for locking the door of the vehicle wherein the ETS (20) is programmed to cancel the hold neutral function if the selector (17) is detected in Park mode or the vehicle is requested to be locked.

5. A control system as claimed in any one of claims 1 to 4 further comprising a retractor actuator to retract the selector (17) inside a housing forming part of a centre console mounted between a driver's seat and a passenger seat into an inactive position where it cannot be readily moved by the driver wherein the retractor actuator in use is also controlled by the TCU (16) to retract the selector (16) when at least a shutting-off of the engine by the On/Off switch (13) is determined.

6. A control system as claimed in any one of claims 1 to 5 wherein the ETS (20) automatically controls the selector drive means (16) together with the retractor actuator when an automatic park mode of the selector (17) is determined.

7. A control system as claimed in any one of claims 1 to 6 in which the selector system (12) is interconnected with electronic modules of the vehicle by a standard protocol bus (21).

8. A method for operating an electric selector control system in accordance with any of claims 1 to 7, when the On/Off ignition switch (13) has been activated to turn the engine ignition off, comprising the steps of:
a) checking that the vehicle is at a standstill position;
b) checking that the ETS position before the On/Off ignition switch was not in Neutral mode and
c) if not providing an instruction command to the drive means to move the selector to Park mode,
d) if yes maintaining the selector in its current position over a predetermined period of time before providing an instruction command to the drive means to move the selector to Park mode.

9. A method as claimed in claim 8 wherein the selector position is monitored over the predetermined period of time and if the selector is monitored in Park mode during the predetermined period of time, an instruction command is provided to the drive means to move the selector to Park mode.

10. A method as claimed in claim 8 when the system is as claimed in claim 3, wherein over the predetermined period of time the method further comprises the steps of measuring the voltage of power supply and if the voltage is determined below a threshold the ETS is programmed to send an instruction command to the drive means to automatically move the selector to Park mode.

11. A method as claimed in claim 8 or claim 10 when the system is as claimed in claim 4, wherein over the predetermined period of time if a request to lock the vehicle is detected then the ETS provides an instruction command to the drive means to automatically move the selector to Park mode.

12. A method as claimed in any one of claims 8 to 11, wherein over the predetermined period of time if the On/Off ignition switch is activated to turn the engine ignition on, the Hold neutral function and the automatic motion of the selector are inhibited until the next activation of the On/Off ignition switch.

13. A method as claimed in any one of claims 8 to 12, wherein the selector system is further provided with an arrangement of illuminated labels (P, R, N, D, S) indicating the selector mode and the selector includes a Sport mode, the selector position is monitored over the predetermined period of time and if the selector is monitored in Reverse mode, Drive mode or Sport mode during the predetermined period of time, an instruction command in order to flash the illuminated label corresponding to the mode selected.

## Patentansprüche

1. Elektrisches Selektor-Steuersystem (12) für ein Automatikgetriebe (11) eines Kraftfahrzeugs, wobei das Fahrzeug einen Motor (10) aufweist und ein schlüsselloses Zugangssystem (K) mit einem elektronischen Zündsteuerungsmodul (14) zum wählbaren Ein- oder Ausschalten der Zündung des Motors als Reaktion auf Betätigung eines Ein/Aus-Schalters (13) umfasst, wobei das Getriebe eine Zahl von Betriebsmodi aufweist, wobei es sich bei mindestens vier der Betriebsmodi um Parkmodus, Fahrmodus, Leerlaufmodus und Rückwärtsmodus handelt, wobei ein Getriebesteuergerät (TCU) (16) vorgesehen ist, das in Gebrauch das Verhältnis des Getriebes steuert, wobei das System (12) einen mehrfach stabilen Selektor (17) umfasst, der vom Fahrer des Fahrzeugs betätigbar ist, um einen jeweiligen der Betriebsmodi des Getriebes zu wählen, wobei das Fahrzeug außerdem einen elektronischen Getriebeselektor (ETS) (20) zum Abfühlen der gewählten Modusstellung des Selektors und Senden eines Befehls an das TCU (16) umfasst, wobei das System (12) weiter Selektorantriebsmittel (22) umfasst, **dadurch gekennzeichnet, dass** die Selektorantriebsmittel (22) in Gebrauch vom ETS (20) dazu gesteuert werden, den mehrfach stabilen Selektor (17) in Abhängigkeit von mindestens einem vorgegebenen Betriebsparameter des Fahrzeugs automatisch in den Parkmodus zu bewegen, wobei es sich bei dem genannten mindestens einen vorgegebenen Betriebsparameter um ein Abstellen des Motors durch den Ein/Aus-Schalter (13) handelt und dass die automatische Bewegung des Selektors (17) in einem vorherbestimmten Zeitraum verhindert wird, die so genannte Leerlaufhaltefunktion, wenn sich der Selektor (17) im Leerlaufmodus befindet, bevor der Motor durch den Ein/Aus-Schalter (13) abgestellt wird.

2. Steuersystem nach Anspruch 1, wobei es sich bei dem mehrfach stabilen Selektor (17) um einen Drehselektor handelt.

3. Steuersystem nach Anspruch 1 oder Anspruch 2, wobei und weiter umfassend eine Leistungsversorgung (9) und einen Spannungssensor (8) zum Messen der Spannung der Leistungsversorgung und das TCU (16) dazu programmiert ist, den Selektor (17) automatisch in den Parkmodus zu bewegen, selbst wenn die Leerlaufhaltefunktion erkannt wird.

4. Steuersystem nach einem der Ansprüche 1 bis 3, wobei das Fahrzeug ein Schloss-Fernsteuersystem (7) zum Verriegeln der Tür des Fahrzeugs aufweist, wobei das ETS (20) dazu programmiert ist, die Leerlaufhaltefunktion aufzuheben, wenn der Selektor (17) im Parkmodus erkannt wird oder die Verriegelung des Fahrzeugs angefordert wird.

5. Steuersystem nach einem der Ansprüche 1 bis 4, weiter umfassend eine Einzugsbetätigungsvorrichtung, um den Selektor (17) in einem Gehäuse, das einen Teil einer zwischen einem Fahrersitz und einem Beifahrersitz angebrachten Mittelkonsole bildet, in eine inaktive Stellung einzuziehen, in der er nicht ohne Weiteres vom Fahrer bewegt werden kann, wobei die Einzugsbetätigungsvorrichtung in Gebrauch außerdem von dem TCU (16) gesteuert wird, um den Selektor (16) einzuziehen, wenn mindestens ein Abstellen des Motors durch den Ein/Aus-Schalter (13) festgestellt wird.

6. Steuersystem nach einem der Ansprüche 1 bis 5, wobei das ETS (20) die Selektorantriebsmittel (16) automatisch zusammen mit der Einzugsbetätigungsvorrichtung steuert, wenn ein automatischer Parkmodus des Selektors (17) festgestellt wird.

7. Steuersystem nach einem der Ansprüche 1 bis 6, wobei das Selektorsystem (12) durch einen Bus mit Standardprotokoll (21) mit Elektronikmodulen des Fahrzeugs verbunden ist.

8. Verfahren zum Betreiben eines elektrischen Selektor-Steuersystems nach einem der Ansprüche 1 bis 7, wenn der Ein/Aus-Zündschalter (13) aktiviert wurde, um die Motorzündung auszuschalten, umfassend folgende Schritte:
a) Überprüfen, ob das Fahrzeug stillsteht;
b) Überprüfen, ob die ETS-Stellung vor dem Ein/Aus-Zündschalter nicht im Leerlaufmodus war; und
c) falls nicht, Bereitstellen eines Anweisungsbefehls an die Antriebsmittel, den Selektor in den Parkmodus zu bewegen,
d) falls ja, Halten des Selektors in seiner derzeitigen Stellung während eines vorherbestimmten Zeitraums vor dem Bereitstellen eines Anweisungsbefehls an die Antriebsmittel, den Selektor in den Parkmodus zu bewegen.

9. Verfahren nach Anspruch 8, wobei die Selektorstellung in dem vorherbestimmten Zeitraum beobachtet wird und wenn der Selektor während des vorherbestimmten Zeitraums im Parkmodus beobachtet wird, ein Anweisungsbefehl an die Antriebsmittel bereitgestellt wird, den Selektor in den Parkmodus zu bewegen.

10. Verfahren nach Anspruch 8, wenn das System Anspruch 3 entspricht, wobei in dem vorherbestimmten Zeitraum das Verfahren weiter die Schritte des Messens der Spannung der Leistungsversorgung umfasst und wenn die Spannung unter einem Schwellenwert festgestellt wird, das ETS dazu programmiert ist, einen Anweisungsbefehl an die Antriebsmittel zu senden, den Selektor automatisch in den Parkmodus zu bewegen.

11. Verfahren nach Anspruch 8 oder Anspruch 10, wenn das System Anspruch 4 entspricht, wobei, wenn in dem vorherbestimmten Zeitraum eine Anforderung zum Verriegeln des Fahrzeugs erkannt wird, das ETS einen Anweisungsbefehl an die Antriebsmittel bereitstellt, den Selektor automatisch in den Parkmodus zu bewegen.

12. Verfahren nach einem der Ansprüche 8 bis 11, wobei, wenn in dem vorherbestimmten Zeitraum der Ein/Aus-Zündschalter aktiviert wird, um die Motorzündung einzuschalten, die Leerlaufhaltefunktion und die automatische Bewegung des Selektors bis zur nächsten Aktivierung des Ein/Aus-Zündschalters verhindert werden.

13. Verfahren nach einem der Ansprüche 8 bis 12, wobei das Selektorsystem weiter mit einer Anordnung beleuchteter Kennzeichnungen (P, R, N, D, S) ausgestattet ist, die den Selektormodus anzeigen und der Selektor einen Sportmodus umfasst, die Selektorstellung in dem vorherbestimmten Zeitraum beobachtet wird und wenn der Selektor während des vorherbestimmten Zeitraums im Rückwärtsmodus, Fahrmodus oder Sportmodus beobachtet wird, ein Anweisungsbefehl zum Blinken der dem gewählten Modus entsprechenden beleuchteten Kennzeichnung gesendet wird.

## Revendications

1. Système électrique de commande de sélecteur (12) d'une transmission automatique (11) d'un véhicule à moteur, le véhicule ayant un moteur (10) et comportant un système d'entrée sans clé (K) ayant un module de commande d'allumage électronique (14) pour sélectivement mettre en marche ou arrêter l'allumage du moteur en réponse à l'activité d'un commutateur de Marche/Arrêt (13), la transmission ayant un certain nombre de modes de fonctionnement, au moins quatre des modes de fonctionnement étant le mode Stationnement, le mode Marche Avant, le mode Point Mort et le mode Marche Arrière, une unité de commande de transmission (TCU) (16) étant prévue qui en service commande le rapport de transmission, le système (12) comportant un sélecteur multistable (17) actionnable par le conducteur du véhicule pour sélectionner un mode respectif des modes de fonctionnement de la transmission, le véhicule ayant également un sélecteur de transmission électronique (ETS) (20) pour détecter la position du mode sélectionné du sélecteur et envoyer une commande à la TCU (16), le système (12) comportant en outre des moyens de commande de sélecteur (22), **caractérisé en ce que** les moyens d'entraînement de sélecteur (22) en service sont commandés par l'ETS (20) pour déplacer automatiquement le sélecteur multistable (17) sur le mode Stationnement en fonction d'au moins un paramètre de fonctionnement spécifié du véhicule, ledit au moins un paramètre de fonctionnement spécifié étant un arrêt du moteur par le commutateur de Marche/Arrêt (13) et **en ce que** le déplacement automatique du sélecteur (17) est inhibé durant une période prédéterminée, selon une fonction dite Fonction de Maintien de Point Mort, quand ledit sélecteur (17) est en mode Point Mort avant un arrêt du moteur par le commutateur de Marche/Arrêt (13).

2. Système de commande selon la revendication 1, dans lequel le sélecteur multistable (17) est un sélecteur rotatif.

3. Système de commande selon la revendication 1 ou 2, dans lequel et comprenant en outre une alimentation électrique (9) et un capteur de tension (8) pour mesurer la tension de l'alimentation électrique et la TCU (16) est programmée pour déplacer automatiquement le sélecteur (17) sur le mode Stationnement même si la Fonction de Maintien de Point Mort est détectée.

4. Système de commande selon l'une quelconque des revendications 1 à 3, le véhicule ayant un moyen de commande de verrouillage à distance (7) pour verrouiller la porte du véhicule, l'ETS (20) étant programmé pour annuler la fonction de maintien de point mort s'il est détecté que le sélecteur (17) est en mode Stationnement ou s'il est demandé de verrouiller le véhicule.

5. Système de commande selon l'une quelconque des revendications 1 à 4, comprenant en outre un actionneur rétracteur pour rétracter le sélecteur (17) à l'intérieur d'un boîtier faisant partie d'une console centrale montée entre un siège de conducteur et un siège de passager dans une position inactive où il ne peut pas être aisément déplacé par le conducteur, l'actionneur rétracteur en service étant également commandé par la TCU (16) afin de rétracter le sélecteur (16) quand au moins un arrêt du moteur par le commutateur de Marche/Arrêt (13) est déterminé.

6. Système de commande selon l'une quelconque des revendications 1 à 5, dans lequel l'ETS (20) commande automatiquement les moyens d'entraînement de sélecteur (16) avec l'actionneur rétracteur quand un mode de stationnement automatique du sélecteur (17) est déterminé.

7. Système de commande selon l'une quelconque des revendications 1 à 6, dans lequel le système de sélecteur (12) est interconnecté à des modules électroniques du véhicule par un bus de protocole standard (21).

8. Procédé d'exploitation d'un système électrique de commande de sélecteur selon l'une quelconque des revendications 1 à 7, quand le commutateur de Marche/Arrêt de l'allumage (13) a été actionné pour couper l'allumage moteur, comprenant les étapes de :
a) vérification que le véhicule est stationnaire ;
b) vérification que la position de l'ETS avant le commutateur de Marche/Arrêt de l'allumage n'était pas en mode Point Mort et
c) dans la négative, fourniture aux moyens d'entraînement d'une commande les instruisant de déplacer le sélecteur sur le mode Stationnement.
d) dans l'affirmative, maintenir le sélecteur à sa position actuelle durant une période de temps prédéterminée avant de fournir aux moyens d'entraînement une commande les instruisant de déplacer le sélecteur sur le mode Stationnement.

9. Procédé selon la revendication 8, dans lequel la position du sélecteur est contrôlée durant la période de temps prédéterminée et s'il est établi que le sélecteur est en mode Stationnement durant la période de temps prédéterminée, une commande est fournie aux moyens d'entraînement les instruisant de déplacer le sélecteur sur le mode Stationnement.

10. Procédé selon la revendication 8 quand le système est tel que revendiqué à la revendication 3, dans lequel durant la période de temps prédéterminée, le procédé comprend en outre les étapes de mesure de la tension de l'alimentation électrique et s'il est déterminé que la tension est inférieure à un seuil, l'ETS est programmé pour envoyer aux moyens d'entraînement une commande les instruisant de déplacer automatiquement le sélecteur sur le mode Stationnement.

11. Procédé selon la revendication 8 ou la revendication 10 quand le système est tel que revendiqué à la revendication 4, dans lequel durant la période de temps prédéterminée, si une demande de verrouillage du véhicule est détectée, l'ETS fournit alors aux moyens d'entraînement une commande les instruisant de déplacer automatiquement le sélecteur sur le mode Stationnement.

12. Procédé selon l'une quelconque des revendications 8 à 11, dans lequel durant la période de temps prédéterminée, si le commutateur de Marche/Arrêt de l'allumage est actionné pour mettre en marche l'allumage moteur, la fonction de Maintien de point mort et le déplacement automatique du sélecteur sont inhibés jusqu'à l'activation suivante du commutateur de Marche/Arrêt de l'allumage.

13. Procédé selon l'une quelconque des revendications 8 à 12, dans lequel le système de sélecteur est doté en outre d'un agencement d'étiquettes lumineuses (P, R, N, D, S) indiquant le mode du sélecteur et le sélecteur comporte un mode Sport, la position du sélecteur est contrôlée durant la période de temps prédéterminée et s'il est établi que le sélecteur est en mode Marche Arrière, mode Marche Avant ou mode Sport durant la période de temps prédéterminée, une commande est envoyée instruisant de faire clignoter l'étiquette lumineuse correspondant au mode sélectionné.
